# EUROPEAN PATENT SPECIFICATION

(11) **EP 3 896 131 B1**
(45) Date of publication and mention of the grant of the patent: **04.12.2024**
(21) Application number: 19894574.3
(22) Date of filing: 01.10.2019
(51) Int. Cl.: C09D 11/101, C09D 11/102, C09D 11/107, C09D 11/322, B41J 2/01, B41M 5/00

(54) **ELECTRON BEAM CURABLE WATER-BASED INK-JET COMPOSITION**
DURCH ELEKTRONENSTRAHLEN HÄRTBARE, WÄSSRIGE TINTENSTRAHLTINTENZUSAMMENSETZUNG
COMPOSITION AQUEUSE D'ENCRE POUR JET D'ENCRE DURCISSABLE PAR FAISCEAU D'ÉLECTRONS

(30) Priority: 11.12.2018 JP 2018231631
(43) Date of publication of application: 20.10.2021
(73) Proprietor: Sakata INX Corporation, Osaka-shi, Osaka 550-0002 (JP)
(72) Inventor: NAKASHIMA, Okinori, Osaka-shi, Osaka 550-0002 (JP); MYOSE, Takuya, Osaka-shi, Osaka 550-0002 (JP); KINJOH, Jun, Osaka-shi, Osaka 550-0002 (JP); SHIOZAKI, Daigo, Osaka-shi, Osaka 550-0002 (JP)
(74) Representative: Botti & Ferrari S.p.A.
(86) International application number: PCT/JP2019/038722
(87) International publication number: WO 2020/121628

(56) References cited:
- WO-A1-2014/045968
- WO-A1-2014/045970
- WO-A1-2014/050604
- WO-A1-82/02894
- JP-A- 2013 043 945
- JP-A- 2013 199 110
- JP-A- 2014 062 190
- US-A1- 2005 288 384
- US-A1- 2013 222 467

## Description

### TECHNICAL FIELD

The present invention relates to an electron beam curable water-based ink-jet ink composition. More specifically, the present invention relates to an electron beam curable water-based ink-jet ink composition which is excellent in storage stability and ejection stability and capable of forming a coating film having an excellent coating film resistance.

### BACKGROUND ART

Conventionally, an electron beam curable water-based ink-jet ink composition which is cured by an electron beam has been developed. Patent Document 1 discloses an ink comprising at least a pigment, a water-soluble resin, a water-soluble monomer that solidifies by application of energy, and a photopolymerization initiator in an aqueous liquid medium. Additionally, US 2005288384 discloses curable water-based inkjet inks.

### PRIOR ART DOCUMENT

### Patent Document

Patent Document 1: JP H07-224241 A

### SUMMARY OF THE INVENTION

However, the ink described in Patent Document 1 has room for improvement in terms of storage stability, ejection stability, and coating film resistance of a coating film to be obtained.

The present invention has been made in view of such conventional problems, and it is an object of the present invention to provide an electron beam curable water-based ink-jet ink composition which is excellent in storage stability and ejection stability and capable of forming a coating film having an excellent coating film resistance.

As a result of intensive studies to solve the above-described problems, the present inventors have found that an electron beam curable water-based ink-jet ink composition comprising a colorant, a resin emulsion, a water-soluble photopolymerizable monomer comprising a predetermined amount of an acrylamide derivative, and water can solve the above-described problems, and completed the present invention.

The electron beam curable water-based ink-jet ink composition according to one aspect of the present invention that solves the above-described problems comprises a colorant, a resin emulsion, a water-soluble photopolymerizable monomer, and water, wherein the water-soluble photopolymerizable monomer comprises an acrylamide derivative, wherein a content of the acrylamide derivative is 20 to 55% by mass in the electron beam curable water-based ink-jet ink composition, and wherein a content of the resin emulsion is 3 to 8 by mass in terms of a solid content in the electron beam curable water-based ink-jet ink composition and wherein the water content is 40 to 75% by mass in the electron beam curable water-based inkjet ink composition.

### EMBODIMENT FOR CARRYING OUT THE INVENTION

### <Electron beam curable water-based ink-jet ink composition>

The electron beam curable water-based ink-jet ink composition (hereinafter, also referred to as an ink composition) according to one embodiment of the present invention comprises a colorant, a resin emulsion, a water-soluble photopolymerizable monomer, and water. The water-soluble photopolymerizable monomer comprises an acrylamide derivative. A content of the acrylamide derivative is 20 to 55% by mass in the ink composition. A content of the resin emulsion is 1 to 11% by mass in terms of a solid content in the ink and the content of water is 40 to 75% by mass in the ink composition. Each will be described below.

### (Colorant)

The ink composition of present embodiment preferably comprises a colorant. When the ink composition comprises a colorant, it can prepare an ink composition of each color.

The colorant is not particularly limited. As way of an example, it is preferable that the colorant can use conventionally used pigments and dyes without particular limitation and is a pigment such as an organic pigment or an inorganic pigment. The colorant may be used in combination.

Examples of the organic pigment include a dye lake pigment, azo-based, benzoimidazolone-based, phthalocyanine-based, quinacridone-based, anthraquinone-based, dioxazine-based, indigo-based, thioindigo-based, perylene-based, perinone-based, diketo-pyrrolo-pyrrole-based, isoindolinone-based, nitro-based, nitroso-based, anthraquinone-based, flavanthrone-based, quinophthalone-based, pyranthrone-based, and indanthrone-based pigments, and the like.

Examples of the inorganic pigment include a colored pigment such as titanium oxide, red oxide, antimony red, cadmium yellow, cobalt blue, ultramarine blue, navy blue, iron black, chrome oxide green, carbon black, and graphite (including achromatic color pigments such as white and black), an extender pigment such as calcium carbonate, kaolin, clay, barium sulfate, aluminum hydroxide, and talc, and the like.

Specific examples of pigments for each representative hue of the ink composition of the present embodiment are as follows. A yellow pigment is C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, or the like, preferably C. I. Pigment Yellow 150, 155, 180, 213, or the like.

A magenta pigment is C. I. Pigment Red 5, 7, 12, 19, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C. I. Pigment Violet 19, or the like, preferably C. I. Pigment Red 122, 202, Pigment Violet 19, or the like.

A cyan pigment is C. I. Pigment Blue 1, 2, 3, 15, 15:1, 15:2, 15:3, 15:4, 15:6, 16, 18, 22, 27, 29, 60, or the like, preferably C. I. Pigment Blue 15:4 or the like.

A black pigment is carbon black (C. I Pigment Black 7) or the like.

A white pigment is titanium oxide, aluminum oxide, or the like, preferably titanium oxide surface-treated with various materials such as alumina and silica, or the like.

A content of the colorant is preferably 1% by mass or more in the ink composition. Moreover, the content of the colorant is preferably 30% by mass or less in the ink composition. When the content of the colorant is within the above-described ranges, the ink composition has an appropriate image quality of a printed matter to be obtained and is excellent in viscosity property.

### (Resin emulsion)

The resin emulsion is appropriately contained in order to improve abrasion resistance of a printed matter to be obtained. The resin emulsion is not particularly limited. By way of an example, examples of the resin emulsion include an acrylic-based resin emulsion, a styrene-acrylic-based resin emulsion, a polyester-based resin emulsion, a polyurethane-based resin emulsion, a polyvinyl acetate-based resin emulsion, a polyvinyl chloride-based resin emulsion, a polybutadiene-based resin emulsion, a polyethylene-based resin emulsion, and the like. The resin emulsion may be used in combination. The resin emulsion is a polyurethane-based resin emulsion in that appearance and various types of resistance of a printed matter to be obtained are excellent.

A glass transition temperature of resin is preferably -30°C or higher, more preferably -25°C or higher, from the viewpoint of enhancing the ejection stability of the ink composition. On the other hand, the glass transition temperature of resin is preferably 30°C or lower, more preferably 25°C or lower, from the viewpoint of enhancing the film-forming property of the ink composition on a print medium.

When resin is an acrylic-based resin or a styrene-acrylic-based resin, the glass transition temperature of resin is a theoretical glass transition temperature calculated by the following Wood's equation. 1/Tg = W1/Tg + W2/Tg2 + W3/Tg3 + ..... + Wx/Tgx [In the equation, Tg1 to Tgx represent glass transition temperatures of respective homopolymers of monomers 1, 2, 3 ... x constituting an anionic group-containing resin, W1 to Wx represent respective polymerization fractions of monomers 1, 2, 3 ... x, and Tg represents a theoretical glass transition temperature. However, a glass transition temperature in the Wood's equation is an absolute temperature.]

A glass transition temperature of resin other than an acrylic-based resin or styrene-acrylic-based resin is a theoretical glass transition temperature calculated by thermal analysis. The method of thermal analysis is a method according to JIS K 7121 (method of measuring a transition temperature of plastic), and the glass transition temperature can be measured under a condition of a temperature rising rate of 20°C/min and a nitrogen gas flow velocity of 20 ml/min using Pyris1 DSC manufactured by PerkinElmer Co., Ltd.

An average particle size of emulsion is preferably 500 nm or less, more preferably 300 nm or less, from the viewpoint of enhancing the ejection stability of the ink composition. The average particle size of emulsion can be calculated by measuring a D50 value with a measurement time of 60 seconds and use of water as a diluting solvent using, for example, a Microtrac particle size distribution measuring device, UPA-150, manufactured by Nikkiso Co., Ltd.

The content of the resin emulsion is 3 to 8% by mass in terms of a solid content in the ink composition. When the content of the resin emulsion is within the above-described ranges, the ink composition is excellent in ejection stability. In addition, a printed matter to be obtained is excellent in appearance and various types of resistance.

### (Water-soluble photopolymerizable monomer)

The water-soluble photopolymerizable monomer comprises an acrylamide derivative. The acrylamide derivative is not particularly limited. By way of an example, examples of the acrylamide derivative include (meth)acrylamide, N-hydroxyethyl acrylamide, N,N-dimethylacrylamide, diethyl acrylamide, acryloyl morpholine, and the like. The acrylamide derivative may be used in combination.

The content of the acrylamide derivative may be 20% by mass or more, preferably 25% by mass or more, in the ink composition. Moreover, the content of the acrylamide derivative may be 55% by mass or less, preferably 45% by mass or less, in the ink composition. When the content of the acrylamide derivative is less than 20% by mass, the ink composition tends to have reduced storage stability and ejection stability. On the other hand, when the content of the acrylamide derivative exceeds 55% by mass, the ink composition tends to have a reduced coating film resistance of a coating film to be obtained.

The water-soluble photopolymerizable monomer may appropriately comprise other water-soluble photopolymerizable monomers in addition to the acrylamide derivative. Other water-soluble photopolymerizable monomers are not particularly limited. By way of an example, examples of other water-soluble photopolymerizable monomers include (meth)acrylic acid; hydroxyalkyl acrylate such as hydroxymethyl (meth)acrylate and hydroxyethyl (meth)acrylate; polyalkylene glycol di(meth)acrylate such as diethylene glycol di(meth)acrylate and dipropylene glycol di(meth)acrylate, (ethylene glycol) methyl ether acrylate, (ethylene glycol) methyl ether methacrylate, polyvinyl alcohol, vinyl pyrrolidone, vinyl 4-methylpyrrolidone, vinyl 4-phenylpyrrolidone, vinyl imidazole, vinyl 4-methylimidazole, vinyl 4-phenylimidazole, and the like.

### (Water)

Water is compounded as a dispersion medium in the above-described resin emulsion or a solvent for dissolving and dispersing a colorant and the like. Water is a purified water, an ion-exchanged water, or the like.

The water content is 40% to 75% by mass in the ink composition. When the water content is within the above-described ranges, the ink composition has an advantage of a good dispersion stability.

### (Optional components)

The ink composition of the present embodiment may appropriately comprise various additives such as a surface conditioner, a water-soluble organic solvent, an antifungal agent, a rust-preventive agent, a thickener, an antioxidant, an ultraviolet absorber, a storage improver, an anti-foaming agent, a moisturizing agent, and a pH adjusting agent, as optional components.

### · Surface conditioner

The ink composition of the present embodiment appropriately comprises a surface conditioner. The surface conditioner is not particularly limited. By way of an example, examples of the surface conditioner include a silicone-based surface conditioner, a fluorine-based surface conditioner, an acetylene-based surface conditioner, and the like. Examples of an acetylene diol-based surface conditioner include Dynol 607, Dynol 609, EXP-4001, EXP-4300, Olfine E1010 (manufactured by Nissin Chemical Co., Ltd.), and the like. Examples of a silicone-based surfactant include BYK-307, 333, 347, 348, 349, 345, 378, 3455 (manufactured by BYK-Chemie), and the like. Examples of a fluorine-based surfactant include F-410, 444, 553 (manufactured by DIC Corporation), FS-65, 34, 35, 31, 30 (manufactured by DuPont), and the like.

When a surface conditioner is compounded, a content of the surface conditioner is not particularly limited. By way of an example, the content of the surface conditioner is preferably an amount such that a surface tension of the ink composition is 25 to 40 mN/m, more preferably 0.1 to 1.5% by mass in the ink composition.

### · Water-soluble organic solvent

The ink composition of the present embodiment may contain a water-soluble organic solvent in order to adjust storage stability, ejection stability, ink flight property, and the like. The water-soluble organic solvent is not particularly limited. By way of an example, examples of the water-soluble organic solvent include alcohols, polyhydric alcohols, lower alkyl ethers of polyhydric alcohols, ketones, ethers, esters, nitrogen-containing compounds, amides, and the like.

Examples of alcohols include methanol, ethanol, n-propanol, n-butanol, n-pentanol, n-hexanol, n-heptanol, n-octanol, n-nonyl alcohol, n-decanol, or isomers thereof, cyclopentanol, cyclohexanol, and the like.

Examples of the polyhydric alcohol include glycerin, ethylene glycol, propylene glycol, 1,3-butylene glycol, 1,4-butylene glycol, 1,2-pentanediol, 4-methyl-1,2-pentanediol, 3,3-dimethyl-1,2-butanediol, 1,5-pentanediol, neopentyl glycol, 1,2-hexanediol, 2-ethyl-1,3-hexanediol, 2-methyl-1,3-butanediol, 5-methyl-1,2-hexanediol, 3-methyl-1,3-butanediol, 3-methyl-1,5-butanediol, 1,6-hexanediol, 1,2-cyclohexanediol, 2,2,4-trimethyl-1,3-pentanediol, 2,5-dimethyl-2,5-hexanediol, 1,2-octanediol, 1,8-octanediol, 1,9-nonanediol, 1,10-decanediol, pentaerythritol, diethylene glycol, dipropylene glycol, triethylene glycol, tetraethylene glycol, polyethylene glycol, polypropylene glycol, thiodiglycol, and the like.

Examples of the lower alkyl ethers of polyhydric alcohols include ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, diethylene glycol monobutyl ether, dipropylene glycol mono-n-propyl ether, dipropylene glycol mono-n-butyl ether, and the like.

Examples of the ketones include acetone, methyl ethyl ketone, methyl butyl ketone, methyl isobutyl ketone, diisopropyl ketone, cyclopentanone, cyclohexanone, and the like.

Examples of the ethers include diethyl ether, isopropyl ether, n-butyl ether, tetrahydrofuran, tetrahydropyran, 1,4-dioxane, and the like.

Examples of the esters include ethyl acetate, propylene carbonate, methyl acetate, ethyl acetate, propyl acetate, isopropyl acetate, butyl acetate, isobutyl acetate, amyl acetate, lactic acid ester, butyric acid ester, dibutylphthalate, dioctylphthalate, cyclic ester such as ε-caprolactone and ε-caprolactam, and the like.

Examples of the nitrogen-containing compounds include 2-pyrrolidone, N-methylpyrrolidone, N-ethylpyrrolidone, N-methyloxazolidinone, N-ethyloxazolidinone, and the like.

Examples of the amides include β-alkoxypropionamide and the like.

When a water-soluble organic solvent is compounded, a content of the water-soluble organic solvent is not particularly limited.

### · Storage improver

Examples of the storage improver include a hindered amine, a UV absorber, an antioxidant, and the like. The hindered amin is of N-CH₃ type, N-H type, N-OR type, or the like.

### · UV absorber

Examples of the UV absorber include a benzophenone-based UV absorber, a benzotriazole-based UV absorber, a salicylate-based UV absorber, a hydroxyphenyltriazine-based UV absorber, a cyanoacrylate-based UV absorber, a nickel complex salt-based UV absorber, and the like.

### · Antioxidant

Examples of the antioxidant include a phenol-based antioxidant, an amine-based antioxidant, a sulfur-based antioxidant, a phosphorus-based antioxidant, and the like.

### · Anti-foaming agent

Examples of the anti-foaming agent include a silicone-based anti-foaming agent, a pluronic-based anti-foaming agent, and the like.

Returning back to the description of the entire ink composition, the ink composition of the present embodiment has a viscosity of preferably 100 mPa·s or less, more preferably 30 mPa·s or less, at 25°C. The ink composition is compounded with a viscosity modifier and the like, if necessary. Besides, in the present embodiment, the viscosity can be measured at 25°C using an E-type viscometer (RE100L-type viscometer, manufactured by Toki Sangyo Co., Ltd.).

### <Preparation method of ink composition>

A method of preparing the ink composition of the present embodiment is not particularly limited. As way of an example, the ink composition can be prepared by mixing the above-described materials with a bead mill, a three-roll mill, or the like. Besides, the pigment may be prepared by mixing the pigment, the above-described pigment dispersant and the photopolymerizable monomer to obtain a contour base ink in advance and adding remainder amounts of the above-described components thereto so as to have desired composition.

### <Manufacturing method of printed matter>

Next, a method of manufacturing a printed matter using the ink composition of the present embodiment will be described.

The method of manufacturing the printed matter of the present embodiment includes a step of printing the above-described ink composition on a base material by an inkjet method.

The base material is not particularly limited. As way of an example, examples of the base material include each resin base material, paper, capsule, gel, metal foil, glass, wood, cloth, and the like.

A method of curing the ink composition is not particularly limited. As way of an example, the ink composition can be cured by being ejected onto a base material followed by being exposed to an electron beam. Specifically, ejection onto the base material can be performed by supplying the above-described ink composition to a printer head of a printer for an inkjet method and ejecting it from this printer head to the base material so that the film thickness of the coating film becomes 1 to 20 µm. Exposure and curing with an electron beam (curing of an image) can be performed by irradiating an ink composition coated on a base material as an image with an electron beam.

An irradiation device that irradiates with an electron beam is not particularly limited. As way of an example, the irradiation device is of a Cockcroft-Walton type, a Van de Graaff type, or a resonance transformer type, etc. An energy of the electron beam is preferably 50 to 1000 eV, more preferably 100 to 300 eV.

As described above, according to the ink composition of the present embodiment, it is possible to provide an ink composition which is excellent in storage stability and ejection stability and capable of forming a coating film having an excellent coating film resistance.

As described above, one embodiment of the present invention has been described. The present invention is not particularly limited to the above-described embodiment. The above-described embodiment mainly describes inventions having the following configurations.
(1) An electron beam curable water-based ink-jet ink composition comprising a colorant, a resin emulsion, a water-soluble photopolymerizable monomer, and water, wherein the water-soluble photopolymerizable monomer comprises an acrylamide derivative, wherein a content of the acrylamide derivative is 20 to 55% by mass in the electron beam curable water-based ink-jet ink composition, and wherein a content of the resin emulsion is 1 to 11% by mass in terms of a solid content in the electron beam curable water-based ink-jet ink composition.
   According to such configuration, the electron beam curable water-based ink-jet ink composition is excellent in storage stability and ejection stability. Moreover, the electron beam curable water-based ink-jet ink composition is capable of forming a coating film having an excellent coating film resistance.
(2) The electron beam curable water-based ink-jet ink composition of (1), wherein the water content is 40 to 75% by mass in the electron beam curable water-based ink-jet ink composition.

According to such configuration, the electron beam curable water-based ink-jet ink composition has an advantage of a good dispersion stability.

### EXAMPLES

Hereinafter, the present invention will be described in more detail with reference to Examples. The present invention is not limited to these Examples. Besides, "%" means "% by mass" and "part" means "part(s) by mass", unless otherwise specified.

Raw materials used and preparation methods are shown below.

### <Resin emulsion>

Urethane-based resin emulsion: solid content: 34%, trade name: R-972, manufactured by DSM
Acrylic-based resin emulsion: solid content: 19.5%, trade name: A-1125, manufactured by DSM

### <Water-soluble photopolymerizable monomer>

Dimethylacrylamide
N-hydroxyethyl acrylamide
Diethyl acrylamide
Acryloyl morpholine
PEG (600) diacrylate
4-hydroxybutyl acrylate

### <Other additives>

Acetylenediol-based surface conditioner: Trade name: Olfine E1010, manufactured by Nissin Chemical Co., Ltd.

### (Example 1. Cyan ink composition)

According to the compounding formulation (% by mass) shown in Table 1, a pigment, a pigment dispersant, dimethylacrylamide, a urethane-based resin emulsion, an acetylenediol-based surface conditioner, and water are dispersed, stirred and mixed to obtain a part by mass of the ink composition in Example 1.

**Table 1**

| | Example | | | | | | | | | |
|---|---|---|---|---|---|---|---|---|---|---|
| | 1 | 2 | 3 | 4 | 5 | 6 | 7 | 8 | 9 | 10 |
| Water | 41.7 | 31.7 | 36.7 | 51.7 | 61.7 | 31.7 | 39.5 | 41.1 | 42.8 | 41.7 |
| Dimethylacrylamide | 40.0 | 40.0 | 30.0 | 40.0 | 20.0 | 50.0 | 40.0 | 40.0 | 40.0 | - |
| N-hydroxyethyl acrylamide | - | - | - | - | - | - | - | - | - | 40.0 |
| Diethyl acrylamide | - | - | - | - | - | - | - | - | - | - |
| Acryloyl morpholine | - | - | - | - | - | - | - | - | - | - |
| PEG (600) diacrylate | - | - | - | - | - | - | - | - | - | - |
| 4-hydroxybutyl acrylate | - | - | - | - | - | - | - | - | - | - |
| Urethane-based (NV: 34%) | 15.0 | - | 30.0 | 5.0 | 15.0 | 15.0 | 15.0 | 15.0 | 15.0 | 15.0 |
| Acrylic-based (NV: 19.5%) | | 25.0 | - | - | - | | - | - | - | - |
| Acetylenediol-based surface conditioner | 0.5 | 0.5 | 0.5 | 0.5 | 0.5 | 0.5 | 0.5 | 0.5 | 0.5 | 0.5 |
| Pigment Blue 15:4 | 2.0 | 2.0 | 2.0 | 2.0 | 2.0 | 2.0 | - | - | - | 2.0 |
| Pigment Red 19 | - | - | - | - | - | - | 3.6 | - | - | - |
| Pigment Yellow 180 | - | - | - | - | - | - | - | 2.4 | - | - |
| Carbon black | - | - | - | - | - | - | - | - | 1.2 | - |
| Pigment dispersant: Solsperse 39000 | 0.8 | 0.8 | 0.8 | 0.8 | 0.8 | 0.8 | 1.4 | 1.0 | 0.5 | 0.8 |
| Total | 100.00 | 100.00 | 100.00 | 100.00 | 100.00 | 100.00 | 100.00 | 100.00 | 100.00 | 100.00 |
| Total content of water | 51.6 | 51.8 | 56.2 | 55.0 | 71.6 | 41.6 | 49.3 | 50.9 | 52.6 | 51.5 |
| Storage stability | ○ | ○ | ○ | ○ | ○ | ○ | ○ | ○ | ○ | ○ |
| Coating film resistance | ○ | ○ | ○ | ○ | Δ | ○ | ○ | ○ | ○ | ○ |
| Ejection stability | ○ | ○ | ○ | ○ | ○ | ○ | ○ | ○ | ○ | ○ |

| | Example | | | Comparative example | | | | | | |
|---|---|---|---|---|---|---|---|---|---|---|
| | 11 | 12 | 13 | 1 | 2 | 3 | 4 | | 5 | |
| Water | 41.7 | 41.7 | 41.7 | 41.7 | 41.7 | 21.7 | 31.7 | | 50.7 | |
| Dimethylacrylamide | - | - | 30.0 | 10.0 | - | 60.0 | 25.0 | | 45.0 | |
| N-hydroxyethyl acrylamide | - | - | - | - | - | - | - | | - | |
| Diethyl acrylamide | 40.0 | - | - | - | - | - | - | | - | |
| Acryloyl morpholine | - | 40.0 | - | - | - | - | - | | - | |
| PEG (600) diacrylate | - | - | 10.0 | 30.0 | - | - | - | | | |
| 4-hydroxybutyl acrylate | - | - | - | - | 40.0 | - | - | | - | |
| Urethane-based (NV: 34%) | 15.0 | 15.0 | 15.0 | 15.0 | 15.0 | 15.0 | 40.0 | | 1.0 | |
| Acrylic-based (NV:19.5%) | - | - | - | - | - | - | | | - | |
| Acetylenediol-based surface conditioner | 0.5 | 0.5 | 0.5 | 0.5 | 0.5 | 0.5 | 0.5 | | 0.5 | |
| Pigment Blue 15:4 | 2.0 | 2.0 | 2.0 | 2.0 | 2.0 | 2.0 | 2.0 | | 2.0 | |
| Pigment Red 19 | - | - | - | - | - | - | - | | - | |
| Pigment Yellow 180 | - | - | - | - | - | - | - | | - | |
| Carbon black | - | - | - | - | - | - | - | | - | |
| Pigment dispersant: Solsperse 39000 | 0.8 | 0.8 | 0.8 | 0.8 | 0.8 | 0.8 | 0.8 | | 0.8 | |
| Total | 100.00 | 100.00 | 100.00 | 100.00 | 100.00 | 100.00 | 100.00 | | 100.0 | |
| Total content of water | 51.5 | 51.5 | 51.5 | 51.5 | 51.5 | 31.6 | 57.7 | | 51.4 | |
| Storage stability | ○ | ○ | Δ | × | × | ○ | Δ | | ○ | |
| Coating film resistance | ○ | ○ | ○ | Δ | ○ | × | ○ | | × | |
| Ejection stability | ○ | ○ | ○ | ○ | Δ | ○ | × | | ○ | |

### (Examples 2 to 13, Comparative examples 1 to 5)

Each ink composition was prepared by the similar method as in Example 1 according to the respective compounding formulation shown in Table 1. Examples 2 to 4 are Reference examples.

### <Evaluation on ink composition and printed matter>

Using the ink compositions in Examples 1 to 13 and Comparative examples 1 to 5, storage stability, coating film resistance, and ejection stability were evaluated according to the following evaluation methods and evaluation criteria. The results are shown in Table 1.

### (1) Storage stability

The ink composition was placed in a glass bottle, and a viscosity (m·Pa) at 25°C was measured using a viscometer (RE100L type viscometer, manufactured by Toki Sangyo Co., Ltd.). Then, it was sealed and stored at 60°C for 1 month, and a viscosity after storage (25°C) was measured with the viscometer. Storage stability was evaluated with a rate of change in viscosity (60°C, (viscosity after 1 month-viscosity before storage)/viscosity before storage)).

### [Evaluation criteria]

○: The rate of change in viscosity was less than 10%.
△: The rate of change in viscosity was 10% or more and less than 20%.
×: The rate of change in viscosity was 20% or more.

### (2) Coating film resistance

Each electron beam curable water-based ink-jet ink composition obtained in Examples and Comparative examples was coated on a base material (polyethylene terephthalate film having a corona discharge treatment on one side (Ester film E5100 (manufactured by Toyobo Co., Ltd., trade name), thickness: 12 µm, hereinafter referred to as a PET film) with a #4 bar coater. Next, it was cured with an EB irradiation device under an acceleration voltage of 90 kV and an irradiation dose of 30 kGy to form a cured film. How the cured film was removed from the PET film when the coating film was rubbed with a bleached cloth 500 g × 200 times was visually observed using a Gakushin-Type fastness tester (manufactured by Daiei Kagaku Seiki MFG Co., Ltd.). Evaluation was performed according to the following criteria.

### [Evaluation criteria]

O: The cured film was not removed.
△: There was a scratch on the surface of the cured film.
×: The cured film was removed and the base material was visible.

### (3) Ejection stability

An inkjet recording device equipped with an inkjet nozzle for low-viscosity ink and each electron beam curable water-based ink-jet ink composition obtained in Examples and Comparative examples were placed under an ambient temperature of 25°C for 24 hours, and temperatures of the inkjet recording device and each ink composition were set to be 25°C. Then, they were continuously typed on the PET film using each electron beam curable water-based ink-jet ink composition under the ambient temperature of 25°C to evaluate the ejection stability, and evaluation was performed according to the following evaluation criteria.

### [Evaluation criteria]

O: There was almost no printing turbulence, and a stable ejection was achieved.
△: There was some printing turbulence, but ejection was achieved.
×: Ejection was not achieved.

As shown in Table 1, all of the ink compositions in Examples 1 to 13 showed excellent storage stability, coating film resistance, and ejection stability. On the other hand, the ink composition in Comparative example 1 having a small content of the acrylamide derivative was inferior in storage stability and coating film resistance. The ink composition in Comparative example 2 comprising no acrylamide derivative was inferior in storage stability and ejection stability. The ink composition in Comparative example 3 having a large content of the acrylamide derivative was inferior in coating film resistance. The ink composition of Comparative example 4 having a large content of the resin emulsion was inferior in storage stability and ejection stability. The ink composition of Comparative example 5 having a small content of the resin emulsion was inferior in coating film resistance.

## Claims

1. An electron beam curable water-based ink-jet ink composition comprising a colorant, a resin emulsion, a water-soluble photopolymerizable monomer, and water,
wherein the water-soluble photopolymerizable monomer comprises an acrylamide derivative,
wherein a content of the acrylamide derivative is 20 to 55% by mass in the electron beam curable water-based ink-jet ink composition,
wherein a content of the resin emulsion is 3 to 8% by mass in terms of a solid content in the electron beam curable water-based ink-jet ink composition,
wherein the resin emulsion contains a polyurethane-based resin emulsion, and
wherein the water content is 40 to 75% by mass in the electron beam curable water-based ink-jet ink composition.

## Patentansprüche

1. Elektronenstrahlhärtbare wasserbasierte Tintenstrahl-Tintenzusammensetzung umfassend einen Farbstoff, eine Harzemulsion, ein wasserlösliches photopolymerisierbares Monomer, und Wasser,
wobei das wasserlösliche photopolymerisierbare Monomer ein Acrylamidderivat umfasst,
wobei ein Gehalt des Acrylamidderivats 20 bis 55 Masse-% in der elektronenstrahlhärtbaren wasserbasierten Tintenstrahl-Tintenzusammensetzung ist,
wobei ein Gehalt der Harzemulsion 3 bis 8 Masse-% hinsichtlich eines Feststoffgehalts in der elektronenstrahlhärtbaren wasserbasierten Tintenstrahl-Tintenzusammensetzung ist,
wobei die Harzemulsion eine Harzemulsion auf Polyurethanbasis enthält, und
wobei der Wassergehalt 40 bis 75 Masse-% in der elektronenstrahlhärtbaren wasserbasierten Tintenstrahl-Tintenzusammensetzung ist.

## Revendications

1. Composition d'encre pour jet d'encre à base d'eau durcissable par un faisceau d'électrons, comprenant un colorant, une émulsion de résine, un monomère photopolymérisable soluble dans l'eau, et de l'eau,
dans laquelle le monomère photopolymérisable soluble dans l'eau comprend un dérivé d'acrylamide,
dans laquelle la teneur en le dérivé d'acrylamide est de 20 à 55 % en masse dans la composition d'encre pour jet d'encre à base d'eau durcissable par un faisceau d'électrons,
dans laquelle la teneur en l'émulsion de résine est de 3 à 8 % en masse en termes de teneur en solides dans la composition d'encre pour jet d'encre à base d'eau durcissable par un faisceau d'électrons,
dans laquelle l'émulsion de résine contient une émulsion de résine à base de polyuréthane, et
dans laquelle la teneur en eau est de 40 à 75 % en masse dans la composition d'encre pour jet d'encre à base d'eau durcissable par un faisceau d'électrons.
